**Europäisches Patentamt**

**European Patent Office**

**Office européen des brevets**

(11) Veröffentlichungsnummer: **0 501 247 B1**

(12) **EUROPÄISCHE PATENTSCHRIFT**

(45) Veröffentlichungstag der Patentschrift: **06.09.95**

(51) Int. Cl.⁶: **C08G 18/67**, C08G 18/66

(21) Anmeldenummer: **92102446.9**

(22) Anmeldetag: **14.02.92**

(54) **Hydrophile, olefinisch ungesättigte Polyurethane und ihre Verwendung als reaktive Emulgatoren.**

(30) Priorität: **27.02.91 DE 4106121**

(43) Veröffentlichungstag der Anmeldung:
**02.09.92 Patentblatt 92/36**

(45) Bekanntmachung des Hinweises auf die
Patenterteilung:
**06.09.95 Patentblatt 95/36**

(84) Benannte Vertragsstaaten:
**AT BE CH DE DK ES FR GB GR IT LI NL SE**

(56) Entgegenhaltungen:
EP-A- 0 098 752     EP-A- 0 381 862
DE-A- 3 829 588     DE-A- 3 916 340
US-A- 4 070 323     US-A- 4 732 960
US-A- 4 983 676

(73) Patentinhaber: **BAYER AG**

**D-51368 Leverkusen (DE)**

(72) Erfinder: **Meixner, Jürgen, Dr.**
**Josef-Brocker-Dyk 56**
**W-4150 Krefeld (DE)**
Erfinder: **Kremer, Wolfgang, Dipl.-Ing.**
**Lilienweg 6**
**W-4173 Kerken 2 (DE)**

EP 0 501 247 B1

**Beschreibung**

Die Erfindung betrifft neue, nichtionisch-hydrophil modifizierte, olefinisch ungesättigte Polyurethane, ihre Verwendung als reaktive Emulgatoren für radikalisch härtbare Kunstharze bei der Herstellung von wäßrigen Kunstharzdispersionen, ein in Wasser dispergierbares Gemisch von ungesättigten Gruppen aufweisenden Kunstharzen, welches als Emulgator-Komponente derartige nichtionisch-hydrophile Polyurethane enthält, und ein Beschichtungsmittel, dessen Bindemittel im wesentlichen aus einem derartigen Gemisch besteht.

In Wasser dispergierbare Polyurethane mit Doppelbindungen sind bereits bekannt (vgl. z.B. EP-A 00 98 752 und DE-OS 2 936 039). Die Hydrophilie dieser bekannten Systeme basiert auf der Anwesenheit von ionischen Zentren, insbesondere von Carboxylat- oder Sulfonatgruppen, die als Gegenionen Alkalikationen oder Ammoniumionen aufweisen, die in den aus den Systemen letztendlich erhaltenen Überzüge verbleiben und deren Wasserresistenz erheblich beeinträchtigen. Die oftmals vorliegenden Amine können im übrigen eine Vergilbung der Lacküberzüge bewirken, während sich die evtl. ebenfalls vorliegenden Hilfslösungsmittel beim Trocknungsprozeß umweltbelastend bemerkbar machen können.

In der DE-OS 3 829 588 werden wasserdispergierbare Allylurethane beschrieben, die auch ungesättigte Dicarbonsäurereste enthalten können. Die Wasserdispergierbarkeit wird hier durch Einbau einer speziellen Kombination von Polyethylenglykolen erreicht. Der relativ hohe Gehalt an Polyethylenglykolen führt jedoch zu Bindemitteln mit nicht ausreichenden Lackfilmeigenschaften.

Eine andere Möglichkeit, zu wasserverdünnbaren Produkten zu gelangen, besteht im Einsatz von externen Emulgatoren So werden beispielsweise gemäß US-PS 4 070 323 Acryloylgruppen tragende Polyurethane mit Hilfe von anionischen oder kationischen Öl-in-Wasser-Emulgatoren (z.B. Natriumlaurylsulfat) in Wasser dispergiert. Diese Emulgatoren werden bei der radikalischen Vernetzung nicht in den Lackfilm eingebaut. Infolgedessen wird der Grad der erreichbaren Wasserfestigkeit der Lackfilme nicht unwesentlich herabgesetz.

Die DE-OS 3 900 257 beschreibt nichtionisch hydrophile (Meth)Acryloylgruppen aufweisende Polyurethane und deren Verwendung als reaktive Emulgatoren für in Wasser nicht dispergierbare Urethan(meth)-acrylate. Mit diesen Emulgatoren sind jedoch nur eine begrenzte Anzahl von Kunstharzen emulgierbar; so sind sie z.B. nicht in der Lage, styrolfreie, ungesättigte Polyesterharze zu emulgieren.

Es war daher die der Erfindung zugrundeliegende Aufgabe, radikalisch härtbare Kunstharze, insbesondere ungesättigte Polyesterharze, in Wasser zu dispergieren, ohne daß dabei die Nachteile gemäß Stand der Technik auftreten.

Diese Aufgabe konnte mit der Bereitstellung der nachstehend näher beschriebenen erfindungsgemäßen hydrophilen Polyurethane bzw. mit deren, nachstehend ebenfalls näher beschriebenen, erfindungsgemäßen Verwendung gelöst werden.

Gegenstand der Erfindung sind Polyurethane mit einem Gehalt an (i) olefinischen Doppelbindungen (berechnet als $=C=C=$, Molekulargewicht $= 24$) von mindestens 1,0 Gew.-% und an (ii) über Polyethylenglykol eingebauten Ethylenoxideinheiten von 20 bis 80 Gew.-%, die durch Umsetzung von

a) 1,0 Mol einer Polyisocyanatkomponente, bestehend aus mindestens einem organischen Polyisocyanat, mit

b) 0,3 bis 2,5 Mol mindestens eines $\beta,\gamma$-ethylenisch ungesättigten Etheralkohols mit 5 bis 29 Kohlenstoffatomen,

c) 0 bis 1,0 Mol mindestens einer Aufbaukomponente mit gegenüber Isocyanatgruppen reaktionsfähigen Gruppen des Molekulargewichtsbereichs 62 bis 2000 und

d) 0,25 bis 0,85 Mol einer Polyethylenglykol-Komponente, bestehend aus mindestens einem Polyethylenglykol des Molekulargewichtsbereichs Mn 1.300 bis 5.000,

unter Einhaltung eines NCO/OH-Äquivalentverhältnisses, bezogen auf alle Ausgangskomponenten a) bis d), von 0,7:1 bis 1,2:1 hergestellt worden sind.

Gegenstand der Erfindung ist auch die Verwendung dieser erfindungsgemäßen Polyurethane als reaktive Emulgatoren für in Wasser nicht dispergierbare, radikalisch härtbare Kunstharze bei der Herstellung von wäßrigen Kunstharzdispersionen.

Gegenstand der Erfindung ist auch ein in Wasser dispergierbares Gemisch von radikalisch härtbaren, ungesättigten Gruppen enthaltenden Kunstharzen, bestehend im wesentlichen aus

A) 50 bis 95 Gew.-Teilen mindestens eines, in Wasser nicht dispergierbaren, ungesättigte Gruppen enthaltenden Kunstharzes des Molekulargewichts Mn 500 bis 10.000 und

B) 5 bis 50 Gew.-Teilen eines, die Dispergierbarkeit des Gemischs in Wasser gewährleistenden Polyurethans,

dadurch gekennzeichnet, daß als Komponente B) mindestens ein Polyurethan der vorstehend genannten, erfindungsgemäßen Art verwendet wird.

2

Gegenstand der Erfindung ist schließlich auch ein wäßriges, ein radikalisch härtbares Bindemittel, sowie gegebenenfalls aus der Lacktechnologie übliche Hilfs- und Zusatzmittel enthaltendes Beschichtungsmittel, dadurch gekennzeichnet, daß das Bindemittel im wesentlichen aus einem Gemisch der vorstehend genannten Art besteht.

Bei den erfindungsgemäßen Polyurethanen handelt es sich im wesentlichen um Umsetzungsprodukte der bereits obengenannten Ausgangskomponenten a) bis d), wobei bei der Herstellung der Polyurethane vorzugsweise pro Mol der Komponente a) 0,7 bis 2,0 Mol der Komponente b), 0,03 bis 0,1 Mol der Komponente c) und 0,3 bis 0,6 Mol der Komponente d) zum Einsatz gelangen.

Die Komponente a) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise ein Molekulargewicht von 168 bis 1.000, vorzugsweise 168 bis 300 aufweisen. Geeignet sind beispielsweise 1,6-Diisocyanatohexan (HDI), 1-Isocyanato-3,3,5-trimethyl-5-isocyanato-methyl-cyclohexan (IPDI), 4,4'-Diisocyanatodicyclohexylmethan, 4,4'-Diisocyanatodiphenylmethan, dessen technischen Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol.Diisocyanate der beispielhaft genannten Art sind als Komponente a) bevorzugt, jedoch sind auch höherfunktionelle Polyisocyanate wie beispielsweise Biuret-, Isocyanurat- oder Urethan-modifizierte Polyisocyanate auf Basis der beispielhaft genannten einfachen Diisocyanate grundsätzlich geeignet. Diese Derivate weisen im allgemeinen ein bis zu 1.000 liegendes Molekulargewicht auf.

Die Herstellung derartiger Derivate ist beispielsweise in US-PS 3 124 605, US-PS 3 183 112, US-PS 3 919 218 oder US-PS 4 324 879 beschrieben.

Die $\beta,\gamma$-ethylenisch ungesättigten Etheralkohole b) enthalten 5 bis 29, vorzugsweise 5 bis 14 Kohlenstoffatome, mindestens eine alkoholische Hydroxylgruppe und mindestens einen, vorzugsweise mindestens zwei, $\beta$-$\gamma$-ethylenisch ungesättigte Etherreste der Formel

$$R\text{-CH-CH} = CH_2\text{-O-} .$$

In dieser Formel steht

R      für Wasserstoff oder einen gesättigten oder olefinisch ungesättigten Alkylrest mit 1 bis 5 Kohlenstoffatomen.

Beispiele hierfür sind Glycerindiallylether, Trimethylolpropandiallylether, Pentaerythrittriallylether, Ethylenglykol- octadienyl-(2,7)-ether, Trimethylolpropan-dioctadienyl-(2,7)-ether und Pentaerythrit-trioctadienyl-(2,7)-ether. Bevorzugt ist Trimethylolpropandiallylether.

Zu den Aufbaukomponenten c) gehören einfache mehrwertige Alkohole des Molekulargewichtsbereichs 62 bis 400 wie beispielsweise Ethylenglykol, Propylenglykol, die isomeren Butandiole oder Hexandiole, Glycerin, Trimethylolpropan, Pentaerythrit, Diethylenglykol, Triethylenglykol, Dipropylenglykol, außerdem die aus der Polyurethanchemie an sich bekannten, höhermolekularen Polyetherpolyole, die durch Alkoxylierung von einfachen Alkoholen der beispielhaft genannten Art in an sich bekannter Weise zugänglich sind, und die Molekulargewichte von über 400 und bis zu 2.000, vorzugsweise bis zu 1.000 aufweisen; ferner die aus der Polyurethanchemie an sich bekannten Polyesterpolyole, die durch Umsetzung der beispielhaft genannten mehrwertigen Alkohole mit mehrwertigen Säuren oder Anhydriden mehrwertiger Säuren wie beispielsweise Adipinsäure, Phthalsäure, Phthalsäureanhydrid, Maleinsäure, Maleinsäureanhydrid, Tetrahydrophthalsäure oder Tetrahydrophthalsäureanhydrid in an sich bekannter Weise zugänglich sind.

Bei der Komponente d) handelt es sich um lineare Polyetherglykole eines als Zahlenmittel bestimmten Molekulargewichts von 1.300 bis 5.000, vorzugsweise 1.500 bis 4.000, deren Alkylenoxideinheiten zumindest zu 80 Mol-%, vorzugsweise zu 100 Mol-%, Ethylenoxideinheiten darstellen.

Der Begriff "Polyethylenglykole" soll somit nicht nur echte Polyethylenglykole, deren Alkylenoxideinheiten ausschließlich Ethylenoxideinheiten darstellen, sondern auch Polyalkylenglykole umfassen, deren Alkylenoxideinheiten überwiegend, d.h. zumindest zu 80 Mol-% Ethylenoxideinheiten darstellen. Derartige "gemischte" Polyalkylenglykole entstehen beispielsweise durch Verwendung von Gemischen verschiedener Alkylenoxide, beispielsweise von Ethylenoxid und Propylenoxid im Molverhältnis ≥ 8:2, bei der Herstellung der Polyetherglykole durch Alkoxylierung geeigneter zweiwertiger Startermoleküle wie beispielsweise Wasser, Ethylenglykol oder Propylenglykol. Vorzugsweise besteht die Komponente d) jedoch aus reinen Polyethylenglykolen.

Die Herstellung der erfingungsgemäßen, als Emulgatoren zu verwendenden, hydrophilen Polyurethane durch Umsetzung der genannten Ausgangskomponenten kann in Substanz oder in gegenüber Isocyanatgruppen inerten Lösungsmitteln wie beispielsweise Aceton, Methylethylketon, Ethylacetat, Butylacetat, Toluol oder Gemische derartiger Lösungsmittel erfolgen, wobei vorzugsweise Reaktionstemperaturen von 20 bis 200 °C, insbesondere 50 bis 150 °C, eingehalten werden.

Zunächst wird die Umsetzung zwischen der Komponente a) und der Komponente b) durchgeführt. Darauf schließt sich die Umsetzung des so erhaltenen Umsetzungsproduktes mit den Komponenten c) und d) an, wobei die Reihenfolge beliebig ist.

In der Praxis kann somit beispielsweise so vorgegangen werden, daß das Polyisocyanat vorgelegt und innerhalb der obengenannten Temperaturbereiche mit dem ungesättigten Monoalkohol b) umgesetzt wird, worauf sich die Umsetzung mit der Komponente c) dann mit der Komponente d) ebenfalls innerhalb der genannten Temperaturbereiche anschließt, bis der NCO-Gehalt auf unter 0,1 Gew.-% abgefallen ist.

Grundsätzlich werden hierbei Art und Mengenverhältnisse der Ausgangskomponenten innerhalb der genannten Bereiche so gewählt, daß, bezogen auf die Komponenten a) bis d), ein NCO/OH-Äquivalentverhältnis von 0,7:1 bis 1,2:1 gewährleistet ist.

Die Urethanbildungsreaktionen können in an sich bekannter Weise z.B. mit Zinnoctoat, Dibutylzinndilaurat oder tertiären Aminen katalysiert werden. Ebenso kann das Polyurethan durch Zugabe geeigneter Inhibitoren und Antioxydantien von je 0,001 bis 0,3 Gew.-%, bezogen auf Gesamtmischung, vor vorzeitiger und unerwünschter Polymerisation geschützt werden.

Die auf diese Weise erhaltenen hydrophilen ungesättigte Gruppen aufweisenden Polyurethane weisen ein als Zahlenmittel bestimmtes, nach der Methode der Gelpermeationschromatographie unter Verwendung von Polystyrol als Standard ermittelbares Molekulargewicht $M_n$ von 1.000 bis 15.000, vorzugsweise 2.000 bis 10.000, einen Gehalt an olefinischen Doppelbindungen (berechnet als $=C=C=$, Molekulargewicht $=$ 24) von mindestens 1,0 Gew.-%, vorzugsweise 1,5 bis 6,0 Gew.-% und einen Gehalt an über Polyethylenglykol eingebauten Ethylenoxideinheiten $-CH_2-CH_2-O-$ von 20 bis 80 Gew.-%, vorzugsweise 30 bis 75 Gew.-%, auf.

Die hydrophilen Polyurethane stellen wertvolle Emulgatoren für hydrophobe, in Wasser nicht dispergierbare, radikalisch vernetzbare Kunstharze dar. Diese Kunstharze weisen ein nach der Methode der Gelpermeationschromatographie unter Verwendung von Polystyrol als Standard ermittelbares Molekulargewicht $M_n$ von 500 bis 10.000, vorzugsweise 500 bis 5.000 auf.

Bei diesen, die Komponente A) der erfindungsgemäßen Gemische darstellenden Kunstharzen handelt es sich vorzugsweise um Polyesterharze, d.h. um Polykondensationsprodukte (i) einer Säurekomponente, bestehend aus mindestens einer $\alpha,\beta$-ethylenisch ungesättigten Dicarbonsäure mit in der Regel 4 oder 5 C-Atomen oder deren esterbildenden Derivaten (z.B. ihren Anhydriden), gegebenenfalls in Abmischung mit bis zu 200 Mol-%, bezogen auf die ungesättigte Säurekomponente, einer oder mehrerer aliphatischen gesättigten Dicarbonsäure mit 4 bis 10 C-Atomen oder cycloaliphatischen oder aromatischen Dicarbonsäure mit 8 bis 10 C-Atomen oder deren esterbildenden Derivaten (z.B. ihren Anhydriden), mit (ii) einer Alkoholkomponente, bestehend aus mindestens einem ein- oder mehrwertigen olefinisch ungesättigten Etheralkohol, der durch Veretherung eines Teils der Hydroxylgruppen von drei- oder höherwertigen Hydroxylverbindungen mit 3 bis 8 Kohlenstoffatomen mit $\beta,\gamma$-ethylenisch ungesättigten Alkoholen erhalten worden ist, gegebenenfalls einem oder mehreren zweiwertigen Alkoholen mit 2 bis 8 C-Atomen und gegebenenfalls einer oder mehreren einwertigen Alkoholen mit 1 bis 18 C-Atomen - also Polyester, wie sie z.B. in der DE-A-1 024 654, der DE-PS 2 221 335 und in Wagner/Sarx, "Lackkunstharze", 5. Aufl., Carl Hanser Verlag, München 1971, S. 139, 130 beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure.

Beispiele für die zu verwendenden aliphatischen gesättigten und cycloaliphatischen und aromatischen Dicarbonsäuren oder ihre Derivate sind Phthalsäure und Phthalsäureanhydrid, Isophthalsäure, Terephthalsäure, Hexa- und Tetrahydrophthalsäure bzw. deren Anhydride, Endomethylentetrahydrophthalsäure und deren Anhydrid, Bernsteinsäure bzw. Bernsteinsäureanhydrid und Bernsteinsäureester und -chloride, Adipinsäure, Sebacinsäure. Um schwer entflammbare Polyester herzustellen, können z.B. Hexachlorendomethylentetrahydrophthalsäure, Tetrachlorphthalsäure oder Tetrabromphthalsäure verwendet werden.

Geeignete, olefinisch ungesättigte Etheralkohole sind Trimethylolpropanmono- und -diallylether, Glycerinmono- und -diallylether, sowie Pentaerythritmono-, -di- und -triallylether. Geeignete zweiwertige Alkohole sind beispielsweise Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxycyclohexyl)-propan oder bisoxalkyliertes Bisphenol A. Geeignete einwertige Alkohole sind insbesondere (cyclo)aliphatische einwertige Alkohole mit 6 bis 18 Kohlenstoffatomen wie beispielsweise n-Hexanol, n-Octanol, n-Decanol, Laurol, Stearylalkohol, Hexahydrobenzylalkohol oder vorzugsweise verzweigte Alkanole wie 2-Ethylhexanol-1 und die isomeren verzweigten Nonanole.

Bei der Herstellung der Polyester können beliebige Gemische der beispielhaft genannten Säurekomponenten (i) und/oder beliebige Gemische der beispielhaft genannten Alkoholkomponenten (ii) eingesetzt werden. Vorzugsweise werden Art und Mengenverhältnisse der beispielhaft genannten Ausgangsmaterialien so gewählt, daß die Polyester Säurezahlen von 1 bis 40, vorzugsweise 10 bis 30, Hydroxylzahlen von 10 bis 100, vorzugsweise 20 bis 50 und einen Gehalt an Allylethergruppen (berechnet als $C_3H_5O$, Molekulargewicht = 57) von mindestens 4 Gew.-%, besonders bevorzugt von mindestens 8 Gew.-% aufweisen.

In den erfindungsgemäßen, in Wasser dispergierbaren Gemischen liegen 50 bis 95, vorzugsweise 70 bis 93 Gew.-Teile der genannten hydrophoben Kunstharze in Abmischung mit 5 bis 50, vorzugsweise 7 bis 30 Gew.-Teilen der genannten, als Emulgatoren wirkenden, hydrophilen Polyurethane vor. Es ist jedoch wichtig, Art und Mengenverhältnisse der Einzelkomponenten im Rahmen der gemachten Ausführungen so zu wählen, daß der Gesamtgehalt der in Wasser dispergierbaren Gemische an von der Komponente d) herrührenden Ethylenoxideinheiten maximal 20, vorzugsweise maximal 15 Gew.-%, beträgt.

Die Herstellung der Gemische kann durch einfaches Abmischen der Einzelkomponenten, gegebenenfalls in Gegenwart von inerten Lösungsmitteln der oben bereits beispielhaft genannten Art, erfolgen.

Zur Herstellung der erfindungsgemäßen wäßrigen Beschichtungsmittel werden die erfindungsgemäßen Gemische in Wasser dispergiert, was beispielsweise durch einfaches Einrühren von Wasser in die vorgelegte Mischung der Kunstharze mittels üblicher Dissolver erfolgen kann.

Zur Ausbildung einer feinteiligen Emulsion ist portionsweiser Wasserzusatz bei Temperaturen unterhalb 40°C vorteilhaft. Es können auf diese Weise stabile Öl-in-Wasser-Emulsionen erhalten werden.

Die auf diese Weise erhaltenen wäßrigen Dispersionen stellen wertvolle wäßrige Bindemittel für Überzugsmittel dar. Sie können als solche oder in Kombination mit den aus der Lacktechnologie bekannten Hilfs- und Zusatzmittel wie z.B. Füllstoffen, Pigmenten, Lösungsmitteln, Verlaufshilfsmitteln und dgl. zur Herstellung von Beschichtungen auf beliebigen Substraten verwendet werden.

Geeignete Substrate sind Papier, Kartonage, Leder, Holz, Kunststoffe, Vlies, Folien, Textilien, keramische Materialien, mineralische Materialien, Glas, Metall, Kunstleder, fotografische Materialien wie z.B. mit fotografischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie gegebenenfalls mitverwendeten inerten Lösungsmitteln kann die Vernetzung der Überzüge entweder mittels energiereicher Strahlung, wie UV-Licht, Elektronen- oder Gammastrahlen oder durch Härtung mit Metallsalzen von Sikkativsäuren und (Hydro)-Peroxiden bei Temperaturen zwischen Raumtemperatur und 250°C erfolgen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in Houben Weyl, Methoden der organischen Chemie, Band E 20, Seite 80 ff, Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-propan-1-on.

Die erwähnten Fotoinitiatoren, die je nach Verwendungszweck der erfindungsgemäßen Massen in Mengen zwischen 0,1 und 10 Gew.-%, vorzugsweise 0,1 bis 5 Gew.-%, bezogen auf das Gewicht der dispergiert vorliegenden hydrophilen und hydrophoben Kunstharze, eingesetzt werden, können als einzelne Substanz oder, wegen häufiger vorteilhafter synergistischer Effekte, auch in Kombination miteinander verwendet werden.

Die bei der Vernetzung mittels Peroxiden eingesetzten Metallsalze von Sikkativsäuren sind z.B. Cobalt, Blei und Mangansalze von Säuren wie Leinölfettsäuren, Tallölfettsäuren, Sojaölfettsäuren, von Harzsäuren, wie Abietinsäure und Naphthensäure oder von Essigsäure und Isooctansäure. Sie werden in solchen Mengen eingesetzt, daß der Metallgehalt, bezogen auf das Gewicht der dispergiert vorliegenden hydrophilen und hydrophoben Kunstharze, 0,005 bis 1 Gew.-% entspricht.

Als (Hydro)-Peroxide seien beispielhaft genannt: Wasserstoffperoxid, Di-tert.-butylperoxid, Benzoylperoxid, Cyclohexanonperoxid, Methylethylketonperoxid, Acetylacetonperoxid, Dinonylperoxid, Bis-(4-tert.-butylcyclohexyl)-peroxydicarbonat, tert.-Butylhydroperoxid, Cumolhydroperoxid, 2,5-Dimethylhexan-2,5-hydroperoxid und Diisopropyl-benzol-monohydroperoxid. Vorzugsweise werden diese (Hydro)-Peroxide in Mengen von 1 bis 10 Gew.-%, bezogen auf das Gewicht der dispergiert vorliegenden hydrophilen und hydrophoben Kunstharze, eingesetzt.

In den nachfolgenden Beispielen beziehen sich alle Prozentangaben auf Gewichtsprozente.

Beispiele

Hydrophobes, ungesättigtes Polyesterharz A1

90 %ige Lösung in Butylacetat eines handelsüblichen, ungesättigten Polyesters mit einer Säurezahl von 25, einer OH-Zahl von 75 und einer Viskosität (23°C) von 30.000 mPa.s, hergestellt aus 1 Mol Maleinsäureanhydrid, 0,85 Mol Ethylenglykol, 0,15 Mol Propylenglykol und 0,3 Mol Trimethylolpropandiallylether.

Hydrophile Polyurethane B

Die in Tabelle 1 genannte Menge an Komponente a) wird zusammen mit 0,025 % (bezogen auf Gesamteinwaage) Dibutylzinndilaurat und 0,5 % (bezogen auf Gesamteinwaage) 2,6-Di-t-butyl-p-kresol in Butylacetat gelöst und unter Durchleiten von Stickstoff auf 50°C erwärmt. Dann wird die in Tabelle 1 genannte Menge an Komponente b) (Trimethylolpropandiallylether), dann die genannte Menge an Komponente c), dann die gesamte Menge an Komponente d) jeweils unter Rühren zudosiert. Die Mischung wird daraufhin bei ca. 60°C gerührt, bis der NCO-Gehalt kleiner 0,1 Gew.-% beträgt. Es entstehen farblose bis hellgelbe, klare, hochviskose Flüssigkeiten, die nach einiger Zeit auskristallisieren.

**Tabelle 1**

| Ausgangsmaterialien (Mol) | B 1 | B 2 | B 3 | B 4 |
|---|---|---|---|---|
| **Komponente a)** | | | | |
| Isophorondiisocyanat | 1,0 | - | 1,0 | 1,0 |
| Hexamethylendiisocyanat | - | 1,0 | - | - |
| **Komponente b)** | | | | |
| Trimethylolpropandiallylether | 0,8 | 0,74 | 0,75 | 0,8 |
| **Komponente c)** | | | | |
| Trimethylolpropan | 0,05 | 0,07 | - | 0,05 |
| Pentaerythrit | - | - | 0,05 | - |
| **Komponente d)** | | | | |
| Polyethylenglykol (MG 1500) | 0,46 | 0,46 | 0,46 | - |
| Polyethylenglykol (MG 2000) | - | - | - | 0,46 |
| Festgehalt (%) | 80 | 60 | 80 | 80 |
| Ethylenoxidgehalt, bezogen auf Feststoff (%) | 59,4 | 63,0 | 60,1 | 67,5 |
| olefinische Doppelbindungen (MG = 24), bezogen auf Feststoff (%) | 3,5 | 3,4 | 3,3 | 2,9 |

Verwendungsbeispiele

Zur Herstellung der Emulsionen werden jeweils die in Tabelle 2 genannten Mengen an hydrophobem Kunstharz A1 und hydrophilen Polyurethanen B gemischt, mit je 20 g Wasser im Dissolver bei 8.000 U/min. 2 Minuten geschert und anschließend mit Wasser unter Rühren (1.000 U/min.) auf 50 % Festkörper eingestellt. Es entstehen stabile, feinteilige Öl-in-Wasser-Emulsionen.

7

Tabelle 2

| Komponenten (g) | 1 | 2 | 3 | 4 |
|---|---|---|---|---|
| A1 | 41,7 | 39,5 | 41,7 | 41,7 |
| B1 | 8,3 | | | |
| B2 | | 10,5 | | |
| B3 | | | 8,3 | |
| B4 | | | | 8,3 |
| Ethylenoxideinheiten, Gew.-%, bezogen auf Feststoff: | 8,9 | 9,5 | 9,0 | 10,1 |

Vergleichsbeispiele

Vergleichsbeispiel 1

Um zu zeigen, daß das Molekulargewicht des verwendeten Polyethylenglykols wesentlich zur Erzeugung der gewünschten Emulgierwirkung ist, wurde das Polyurethan B1 mit einem nicht erfindungsgemäßen Polyethylenglykol hergestellt:
Die Herstellungsweise für Polyurethan B1 wird exakt wiederholt mit der Änderung, daß Polyethylenglykol (MG 1000) statt Polyethylenglykol (MG 1500) verwendet wird.

Es entsteht ein hochviskoses Produkt. Wird dieses Produkt analog Beispiel 1 mit dem ungesättigten Polyesterharz A1 gemischt und unter Dissolver mit Wasser geschert, so entsteht eine grobteilige Emulsion, die sich sofort wieder in eine organische und eine wäßrige Schicht trennt.

Hieran ändert sich auch nichts, wenn soviel des Produkts aus Vergleichsbeispiel 1 verwendet wird, daß der exakt gleiche Ethylenoxidgehalt der Mischung des Beispiels 1 erhalten wird.

Vergleichsbeispiel 2

Um die Unwirksamkeit der reaktiven Emulgatoren aus DE-OS 3 900 257 zur Emulgierung von ungesättigten Polyesterharzen zu zeigen, wurde das dort Polyurethanharz B1 genannte Emulgatorharz nachgestellt. (1,0 Mol Isophorondiisocyanat, 1,0 Mol Hydroxyethylacrylat, 0,5 Mol Polyethylenglykol (MG 1550), 90 %ig in Butylacetat).

Wird dieses Produkt analog Beispiel 1 mit dem ungesättigten Polyesterharz A1 gemischt und unter Dissolver mit Wasser geschert, so entsteht eine Emulsion, die sich jedoch sofort wieder in eine organische und eine wäßrige Schicht trennt.

Verwendungsbeispiele

a) Peroxidische Härtung
Die wäßrigen Emulsionen der Beispiele 1 bis 4 werden jeweils mit 2 Gew.-% einer wäßrigen Kobaltacetatlösung (5 Gew.-% Metallgehalt) und 3 Gew.-% Wasserstoffperoxid (30 %ige, wäßrige Lösung) versetzt und auf Glasplatten aufgezogen (Naßfilmdicke 90 $\mu$m).

Diese Lackfilme werden bei 50°C bis zur Klebfreiheit erhitzt (20 Minuten) und anschließend bei Raumtemperatur gelagert.

Nach 24 Stunden sind die Lackfilme kratzfest und besitzen eine Härte (Pendeldämpfung nach König, DIN 53 157) von mehr als 100 s. Die Prüfung der Wasser- und Lösemittelfestigkeit erfolgt nach einwöchiger Lagerung bei Raumtemperatur. Hierfür werden die Filme:
- 1 Stunde mit einer Mischung Ethanol/Wasser (1:1)
- 2 Minuten mit Ethylacetat
- 2 Minuten mit Aceton
- 16 Stunden mit Wasser

benetzt. Es zeigten sich keine Veränderungen des Films durch Fleckenbildung, Erweichen oder Loslösen des Films von der Unterlage.

b) Fotochemische Härtung
Die Beispiele 1 bis 4 werden vor dem Emulgieren mit je 4 Gew.-% Fotoinitiator (2-Hydroxy-2-methyl-1-phenyl-propan-1-on) versetzt Nach dem Emulgieren werden die Produkte auf Glasplatten aufgezogen (Naßfilmdicke 90 $\mu$m) und nach Verdunsten des Wassers (6 Minuten bei 50°C) unter 2 UV-Hochdruck-Strahlern (80 W/cm, 10 cm Abstand) mit einer Geschwindigkeit von 5 m/min. durchbewegt.

Es entstehen kratz-, wasser- und lösemittelfeste Überzüge mit Härten (Pendeldämpfung nach König, DIN 53 157) von mehr als 100 s.

Die Wasser- und Lösemittelfestigkeit wurde analog der Prüfweise bei den peroxidisch ausgehärteten Überzügen durchgeführt.

**Patentansprüche**

1. Polyurethane mit einem Gehalt an (i) olefinischen Doppelbindungen (berechnet als $=C=C=$, Molekulargewicht $= 24$) von mindestens 1,0 Gew.-% und an (ii) über Polyethylenglykol eingebauten Ethylenoxideinheiten von 20 bis 80 Gew.-%, die durch Umsetzung von

a) 1,0 Mol einer Polyisocyanatkomponente, bestehend aus mindestens einem organischen Polyisocyanat, mit

b) 0,3 bis 2,5 Mol mindestens eines $\beta,\gamma$-ethylenisch ungesättigten Etheralkohols mit 5 bis 29 Kohlenstoffatomen,

c) 0 bis 1,0 Mol mindestens einer Aufbaukomponente mit gegenüber Isocyanatgruppen reaktionsfähigen Gruppen und

d) 0,25 bis 0,85 Mol einer Polyethylenglykol-Komponente, bestehend aus mindestens einem Polyethylenglykol des Molekulargewichtsbereichs Mn 1.300 bis 5.000,

unter Einhaltung eines NCO/OH-Äquivalentverhältnisses, bezogen auf alle Ausgangskomponenten a) bis d), von 0,7:1 bis 1,2:1 hergestellt worden sind.

2. Verwendung der Polyurethane des Anspruchs 1 als reaktive Emulgatoren für in Wasser nicht dispergierbare, radikalisch härtbare Kunstharze bei der Herstellung von wäßrigen Kunstharzdispersionen.

3. In Wasser dispergierbares Gemisch von radikalisch härtbaren, ungesättigten Gruppen enthaltenden Kunstharzen, bestehend im wesentlichen aus

A) 50 bis 95 Gew.-Teilen mindestens eines, in Wasser nicht dispergierbaren, ungesättigte Gruppen enthaltenden Kunstharzes des Molekulargewichts Mn 500 bis 10.000 und

B) 5 bis 50 Gew.-Teilen eines, die Dispergierbarkeit des Gemischs in Wasser gewährleistenden Polyurethans,

dadurch gekennzeichnet, daß als Komponente B) mindestens ein Polyurethan gemäß Anspruch 1 verwendet wird.

4. Wäßriges, ein radikalisch härtbares Bindemittel, sowie gegebenenfalls aus der Lacktechnologie übliche Hilfs- und Zusatzmittel enthaltendes Beschichtungsmittel, dadurch gekennzeichnet, daß das Bindemittel im wesentlichen aus einem Gemisch gemäß Anspruch 3 besteht

**Claims**

1. Polyurethanes having a content of (i) olefinic double bonds (expressed as $=C=C=$, molecular weight $= 24$) of at least 1.0% by weight and of (ii) ethylene oxide units incorporated through polyethylene glycol of 20 to 80% by weight, which have been obtained by reaction of

a) 1.0 mol of a polyisocyanate component consisting of at least one organic polyisocyanate with

b) 0.3 to 2.5 mol of at least one $\beta,\gamma$-ethylenically unsaturated ether alcohol containing 5 to 29 carbon atoms,

c) 0 to 1.0 mol of at least one synthesis component containing isocyanate-reactive groups and

d) 0.25 to 0.85 mol of a polyethylene glycol component consisting of at least one polyethylene glycol having a molecular weight Mn in the range from 1,300 to 5,000,

in an NCO/OH equivalent ratio, based on all the starting components a) to d), of 0.7:1 to 1.2:1.

2. The use of the polyurethanes claimed in claim 1 as reactive emulsifiers for non-water-dispersible, radical-curable synthetic resins in the production of aqueous synthetic resin dispersions.

3. A water-dispersible mixture of radical-curable synthetic resins containing unsaturated groups, consisting essentially of

A) 50 to 95 parts by weight of at least one non-water-dispersible synthetic resin containing unsaturated groups and having a molecular weight Mn of 500 to 10,000 and

B) 5 to 50 parts by weight of a polyurethane guaranteeing the dispersibility of the mixture in water, characterized in that at least one polyurethane according to claim 1 is used as component B).

4. A water-based coating composition containing a radical-curable binder and, optionally, typical lacquer auxiliaries and additives, characterized in that the binder consists essentially of the mixture claimed in claim 3.

**Revendications**

1. Polyuréthanes contenant (i) au moins 1,0 % en poids de doubles liaisons oléfiniques (exprimées en $=C=C=$, poids moléculaire = 24) et (ii) de 20 à 80 % en poids de motifs d'oxyde d'éthylène introduits par des polyéthylèneglycols, qui ont été préparés par réaction de

   a) 1,0 mol d'un composant polyisocyanate consistant en au moins un polyisocyanate organique, avec

   b) 0,3 à 2,5 moi d'au moins un étheralcool à insaturation $\beta,\gamma$-éthylénique contenant 5 à 29 atomes de carbone,

   c) 0 à 1,0 mol d'au moins un composant de synthèse à groupes réactifs avec les groupes isocyanates et

   d) 0,25 à 0,85 mol d'un composant poléthylèneglycol consistant en au moins un polyéthylèneglycol de poids moléculaire Mn 1300 à 5000,

   en maintenant un rapport de 0,7:1 à 1,2:1 entre les équivalents de groupes NCO et les équivalents de groupes OH, sur tous les composants de synthèse a) à d).

2. Utilisation des polyuréthanes de la revendication 1 en tant qu'agents émulsionnants réactifs pour des résines synthétiques durcissables sous l'action de radicaux libres mais non dispersables dans l'eau à la préparation de dispersions aqueuses de résines synthétiques.

3. Mélange dispersable dans l'eau de résines synthétiques durcissables sous l'action de radicaux libres et contenant des groupes insaturés, qui consiste essentiellement en

   A) 50 à 95 parties en poids d'au moins une résine synthétique non dispersable dans l'eau, contenant des groupes insaturés et de poids moléculaire Mn 500 à 10 000 et

   B) 5 à 50 parties en poids d'un polyuréthane assurant la dispersabilité du mélange dans l'eau, caractérisé en ce que le composant B) consiste en au moins un polyuréthane selon la revendication 1.

4. Produit de revêtement aqueux contenant un liant durcissable sous l'action des radicaux libres et le cas échéant des produits auxiliaires et additifs usuels dans l'industrie des peintures et vernis, caractérisé en ce que le liant consiste essentiellement en un mélange selon la revendication 3.